# EUROPÄISCHE PATENTSCHRIFT

(11) **EP 0 942 210 B1**
(45) Veröffentlichungstag und Bekanntmachung des Hinweises auf die Patenterteilung: **07.07.2004**
(21) Anmeldenummer: 99104170.8
(22) Anmeldetag: 02.03.1999
(51) Int. Cl.: F16K 11/078, F16K 27/04

(54) **Einlochmischbatterie**
Single-hole mixer
Robinetterie mélangeuse monotrou

(30) Priorität: 11.03.1998 DE 19810429
(43) Veröffentlichungstag der Anmeldung: 15.09.1999
(73) Patentinhaber: Grohe Water Technology AG & Co. KG, 58675 Hemer (DE)
(72) Erfinder: Kahle, Dieter, 58636 Iserlohn (DE); Stolle, Eberhard, 58119 Hagen (DE)

(56) Entgegenhaltungen:
- EP-A- 0 771 980
- WO-A-97/26477
- DE-A- 4 421 387
- FR-A- 1 592 022
- US-A- 3 875 960

## Beschreibung

Die Erfindung betrifft eine Einlochbatterie zum Mischen und/oder Zapfen von Kalt-, Warm- oder Mischwasser mit einem Gehäuse, in dem wenigstens ein Aufnahmeraum für ein Paßstück mit Durchlaßöffnungen für eine Mischventilkartusche vorgesehen ist, und in dessen Boden drei Öffnungen angeordnet sind, in welche jeweils eine Leitung für den Wasserab- und/oder Wasserzufluß einsteckbar ist, wobei das Paßstück zusammen mit der Mischventilkartusche gegen den Boden des Gehäuses verspannt ist.

Eine derartige Einlochmischbatterie ist aus der deutschen Offenlegungsschrift DE 44 21 387 A1 bekannt. Dadurch, daß im Gehäuseboden dieser Batterie drei Öffnungen für die Aufnahme von Leitungen für die Zu- und Abführung von Wasser vorgesehen sind, wird es ermöglicht, durch den Einsatz eines jeweils entsprechenden Paßstücks den gleichen Armaturenkörper für zwei verschiedene Installationsweisen zu verwenden, nämlich
1. für den Betrieb mit Druckwarmwasser und Druckkaltwasser mittels zwei Leitungen und
2. für den Betrieb mit einem drucklosen Warmwasserspeicher mittels drei Leitungen.

Der Erfindung liegt die Aufgabe zugrunde, die im Oberbegriff des Anspruchs 1 angegebene Einlochbatterie für weitere Einsatzgebiete auszubilden.

Diese Aufgabe wird mit der im Anspruch 1 angegebenen Einlochbatterie gelöst.

Weitere Ausgestaltungen der Erfindung sind in den Ansprüchen 2 bis 6 angegeben.

Die mit der Erfindung erzielbaren Vorteile bestehen insbesondere darin, daß bei einer Zuführung von Druckwarmwasser und Druckkaltwasser von der Einlochmischbatterie eine separate Schlauchbrause betrieben werden kann.
In dem erfindungsgemäßen Paßstück mit einer Anschlußöffnung für eine Mischwasserleitung ist eine Umstellvorrichtung integriert, mit der wahlweise ein am Gehäuse der Einlochmischbatterie ausgebildeter Auslauf oder eine über eine Schlauchleitung verbundene Handbrause mit Mischwasser versorgt werden kann. Hierbei ist es für den Umschalteffekt erforderlich, daß der Mischwasserausfluß im Bereich des Handgriffs der Brause absperrbar ist.
Mit der erfindungsgemäßen Ausbildung wird insbesondere erreicht, daß anstatt eines speziellen Armaturenkörpers für jeden der verschiedenen Einsatzbereiche ein in Großserie gefertigte Armaturenkörper verwendet werden kann. Dabei kann der spezielle Einsatzbereich nach dem Baukastenprinzip erst bei der Endmontage der Armaturen durch die Verwendung eines entsprechenden Paßstücks bestimmt werden. Dieses ermöglicht u. a. eine reduzierte Lagerhaltung und eine Verkürzung der Lieferzeiten. Darüber hinaus kann auch bereits bei installierten Einlochbatterien mit Druckwarmwasseranschluß eine nachträgliche Umrüstung bzw. Erweiterung auf eine Schlauchbrause beim Endkunden erfolgen.

Ausführungsbeispiele der Erfindung sind in der Zeichnung dargestellt und werden im folgenden näher beschrieben. Es zeigt
- Fig. 1: eine Einlochwaschtischbatterie, teilweise geschnitten, mit einem Umschaltventil, welches sich in einer Schaltposition befindet, in der der Mischwasseraustritt zur Anschlußöffnung im Paßstück freigegeben wird, während der Austritt in den Auslauf am Batteriekörper abgesperrt ist;
- Fig. 2: einen Teil der in Fig. 1 gezeigten Einlochwaschtischbatterie, wobei das Umschaltventil sich in einer Schaltposition befindet, in der der Mischwasseraustritt in den Auslauf am Batteriekörper freigegeben ist;
- Fig. 3: das in Fig. 1 gezeigte Paßstück in der Schnittebene III der Fig. 4;
- Fig. 4: das in Fig. 3 gezeigte Paßstück in der Unteransicht;
- Fig. 5: das in Fig. 3 gezeigte Paßstück in der Draufsicht;
- Fig. 6: das in Fig. 3 gezeigte Paßstück in der Schnittebene VI;
- Fig. 7: das in Fig. 1 gezeigte Umschaltventil;
- Fig. 8: das in Fig. 7 gezeigte Umschaltventil um 90° gedreht;
- Fig. 9: ein Verschlußstück, mit dem Kanäle im Paßstück von der Mantelseite her verschließbar sind, im Schnitt;
- Fig. 10: ein weiteres Verschlußstück für einen Kanal im Paßstück in Seitenansicht;
- Fig. 11: ein anderes Paßstück, welches in das in Fig. 1 gezeigte Gehäuse der Einlochwaschtischbatterie einsetzbar ist, in der Schnittebene XI der Fig. 12;
- Fig. 12: das in Fig. 11 gezeigte Paßstück in der Unteransicht;
- Fig. 13: das in Fig. 11 gezeigte Paßstück in Draufsicht;
- Fig. 14: das in Fig. 13 gezeigte Paßstück um 90° gedreht;
- Fig. 15: das in Fig. 11 gezeigte Paßstück in der Schnittebene XV;
- Fig. 16: ein in einem Gehäuse angeordnetes Umschaltventil, wobei das im Schnitt dargestellte Gehäuse in eine Radialöffnung des in Fig. 11 gezeigten Paßstücks einsetzbar ist;
- Fig. 17: das in Fig. 16 gezeigte Umschaltventil um 90° gedreht.

Der Einfachheit halber sind bei den Ausführungsbeispielen in der Zeichnung gleiche oder entsprechende Elemente mit jeweils gleichen Bezugszeichen versehen.

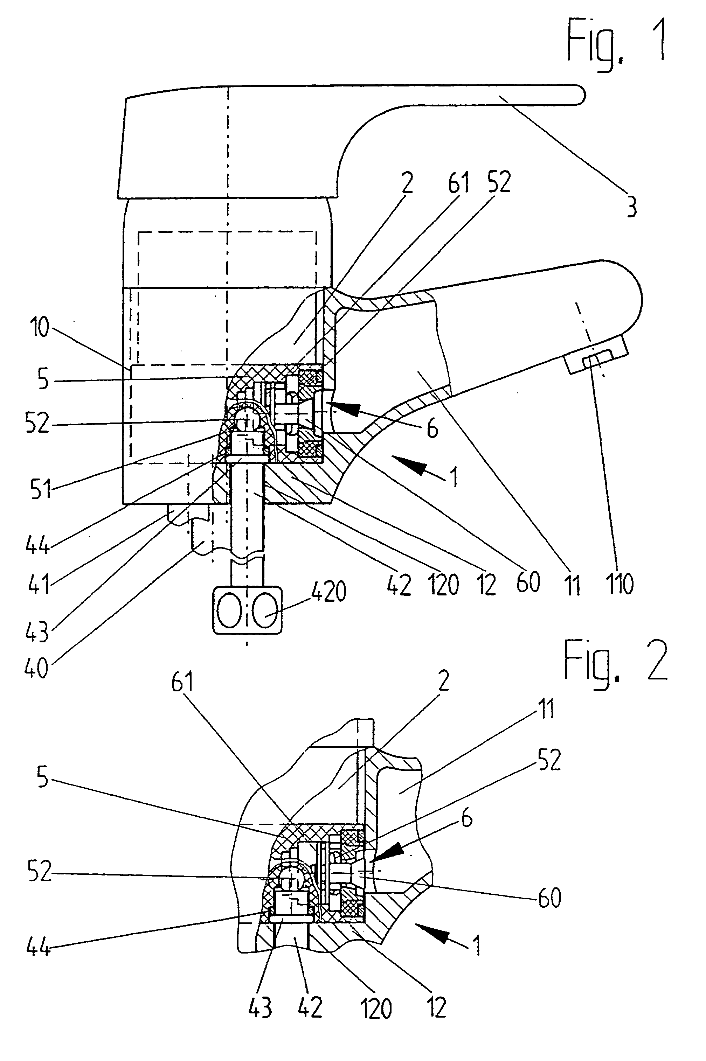

Bei dem in Fig. 1 bis 10 dargestellten Ausführungsbeispiel ist in einem Gehäuse 1 in einem Aufnahmeraum 10 ein Paßstück 5 mit einer Mischventilkartusche 2 angeordnet. Die Mischventilkartusche 2 trägt an dem vorstehenden Endbereich einen Handgriff 3, mit dem in einem ersten Freiheitsgrad das Mischungsverhältnis des zufließenden Kalt- und Warmwassers und in einem zweiten Freiheitsgrad die Gesamtausflußmenge pro Zeiteinheit einstellbar ist.

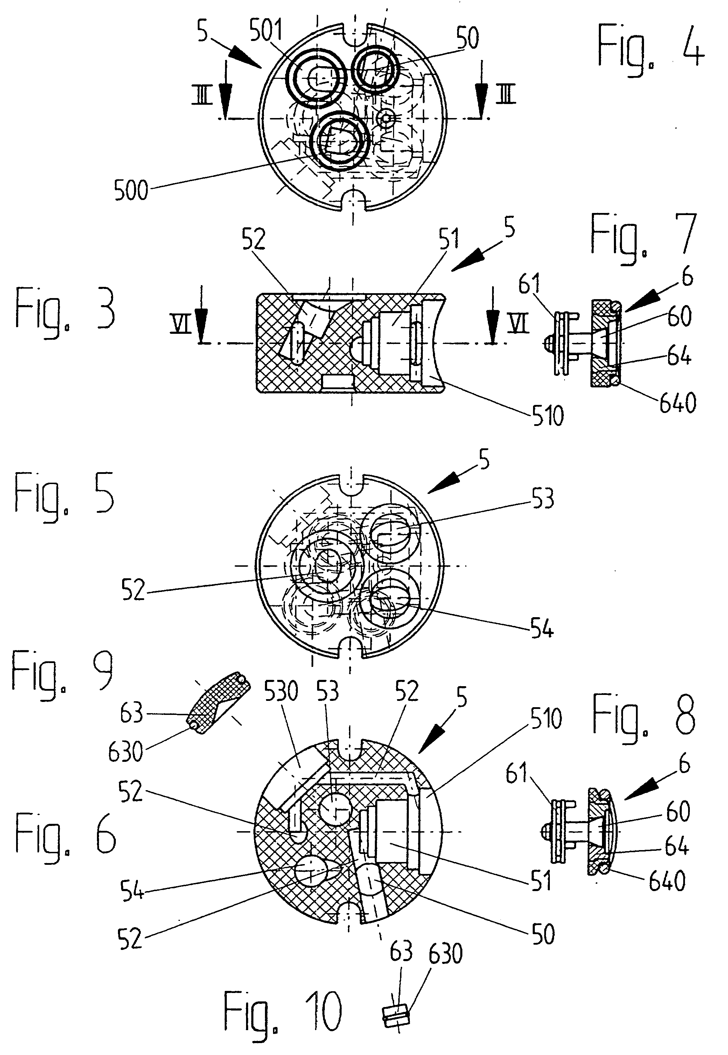

Der Aufnahmeraum 10 ist im unteren Bereich von einem Boden 12 verschlossen, in dem drei Öffnungen angeordnet sind, wobei von einer ersten Öffnung eine Leitung 40 für den Kaltwasserzufluß, von einer zweiten Öffnung eine Leitung 41 für Warmwasserzufluß und von einer dritten Öffnung 120 eine Leitung 42 für Mischwasser aufgenommen ist. Die Leitungen 40,41,42 liegen im Aufnahmeraum 10 jeweils mit einem Ringbund 43 zwischen dem Paßstück 5 und der inneren Oberfläche des Bodens 12 auf und sind somit axial gesichert. Darüber hinaus tragen sie oberhalb des Ringbunds 43 jeweils einen Dichtring 44, mit dem sie dichtend von Anschlußöffnungen 50,500,501 des Paßstücks 5 aufgenommen sind. In einer Radialöffnung 51 des Paßstücks 5 ist ein Ventilglied 6 eines auf den Fließdruck des Mischwassers ansprechenden Umschaltventils angeordnet. Das Ventilglied 6 weist einen Verschlußkörper 60 auf, der mit einem Ventilsitzring 64 zusammenwirkt und den Mischwasseraustritt in einen Auslauf 11 des Gehäuses 1 steuert. Axial versetzt zu dem Verschlußkörper 60 ist an dem Ventilglied 6 ein Drosselkörper 61 ausgebildet. Das Ventilglied 6 ist in der Radialöffnung 51 angeordnet, wie es aus Fig. 1 und 2 zu entnehmen ist, wobei der Drosselkörper 61 in einem zylindrischen Bereich der Radialöffnung 51 axial verschieblich geführt ist.
An die Anschlußöffnungen 500 und 501 ist in dem Paßstück 5 ein Kaltwasserkanal 53 und ein Warmwasserkanal 54 angeschlossen, der jeweils das Paßstück 5 durchdringt und an der gegenüberliegenden Stirnseite in die Mischventilkartusche 2 mündet, wie es insbesondere aus Fig. 4 und 5 zu entnehmen ist. Das in der Mischventilkartusche 2 erzeugte Mischwasser wird stirnseitig (Fig. 5) in einen Mischwasserkanal 52 des Paßstücks 5 abgegeben. Der Mischwasserkanal 52 ist im Paßstück 5 bogenförmig ausgebildet und von der Seite in die Radialöffnung 51 eingeführt, wie es insbesondere aus Fig. 6 zu entnehmen ist. Teile des Mischwasserkanals 52 münden in eine Entformöffnung 530, die radial mit einem Stopfen 63, an dessen Mantelfläche ein Dichtring 630 angeordnet ist, verschlossen werden kann. Die Stopfen 63 werden dabei in der Stecklage des Paßstücks 5 von der zylindrischen Wandung des Aufnahmeraums 10 in der Axialposition gesichert. Der Mischwasserkanal 52 wird im Grund der Radialöffnung 51 herausgeführt und gelangt danach in die Anschlußöffnung 50 für Mischwasser des Paßstücks 5, an der die Leitung 42 für Mischwasser angeschlossen ist.
Das Ventilglied 6 wird seitlich in die Radialöffnung 51 eingeschoben, wobei der Ventilsitzring 64 von einer Einsenkung 510 aufgenommen wird. An der außen liegenden, entsprechend der zylindrischen Mantelform des Aufnahmeraums 10 ausgebildeten Stirnseite des Ventilsitzrings 64 ist ein Dichtring 640 angeordnet, so daß in der Stecklage im Aufnahmeraum 10 der Ventilsitzring 64 radial gedichtet zur zylindrischen Wandung des Aufnahmeraums 10 im Paßstück 5 gehalten ist. Der Dichtring 640 umschließt in der Stecklage eine Eintrittsöffnung eines am Gehäuse 1 ausgebildeten Auslaufs 11.

Bei der Montage der Einlochwaschtischbatterie werden zunächst die Leitungen 40,41 und, je nach dem Verwendungszweck, die Leitung 42 in die Öffnungen im Boden 12 des Gehäuses 1 eingesteckt. Danach wird ein Paßstück mit oder ohne Anschlußöffnung 50 für Mischwasser in den Aufnahmeraum eingebracht, so daß ein dichter Anschluß der Leitungen 40,41 und wahlweise 42 gewährleistet ist. Soll neben dem Auslauf 11 noch eine separate Handbrause über eine Schlauchleitung wahlweise mit Mischwasser versorgt werden, so wird das Paßstück 5, nachdem die Stopfen 63 zur Abdichtung der seitlichen Austrittsöffnungen des Mischwasserkanals 52 eingeführt sind und auch das Ventilglied 6 mit dem Ventilsitzring 64 in die Radialöffnung 51 eingebracht ist, in den Aufnahmeraum 10 eingesteckt. Anschließend wird das Paßstück 5 mit der Mischventilkartusche 2 mit einer in der Zeichnung nicht dargestellten Schraubeinrichtung axial gegen den Boden 12 verspannt. An der Leitung 42 ist stromabwärts eine Anschlußverschraubung 420 ausgebildet, an der ein Schlauch für eine Handbrause - in der Zeichnung nicht dargestellt - anschließbar ist. Außerdem wird an der Mischventilkartusche 2 der Handgriff 3 befestigt, und an dem Auslauf 11 ein Mundstück 110 für den Wasseraustritt eingebracht. Damit ist die werksseitige Montage der Armatur abgeschlossen.
Bei der Installation an der Baustelle wird das Gehäuse 1 der Einlochwaschtischbatterie mit dem Boden 12 an einem Waschtisch etc. - in der Zeichnung nicht dargestellt - befestigt, wobei die Leitungen 40,41,42 durch eine Befestigungsöffnung des Waschtisches nach unten geführt werden, derart, daß die Leitungen 40,41 an das Versorgungsleitungsnetz für Kaltwasser und für Warmwasser angeschlossen werden. An der Anschlußverschraubung 420 wird ein Schlauch angeschlossen, der durch eine separate Öffnung aus dem Waschtisch herausgeführt ist und an seinem Ende eine Handbrause trägt. Diese sogenannte Schlauchbrause ist dabei mit einem selbst schließenden Ventil versehen, d. h. nur bei einem Eindrücken eines Betätigungshebels am Griff der Handbrause wird der Wasseraustritt aus der Brause freigegeben.
In der in Fig. 1 gezeigten Stellung des Ventilglieds 6 ist der Mischwasseraustritt in den Auslauf 11 abgesperrt und der Wasserauslauf aus der Handbrause freigegeben. Der Drosselkörper 61 wird hierbei von dem durchfließenden Mischwasser in Richtung auf den Grund der Radialöffnung 51 bewegt, so daß der Verschlußkörper 60 in seiner Schließstellung gehalten ist.
Wird dagegen vom Benutzer kein weiterer Wasseraustritt an der Handbrause gewünscht, so wird durch Loslassen des Betätigungsglieds das dort vorhandene Ventil in die Absperrstellung gebracht, so daß kein weiteres Mischwasser in die Leitung 42 einströmen kann. Nunmehr wirkt der statische Druck auf den Verschlußkörper 60 ein und verschiebt das Ventilglied 6 radial nach außen, so daß der Ausfluß in den Auslauf 11 freigegeben wird und ein entsprechender Wasserstrahl an dem Mundstück 110 austritt.

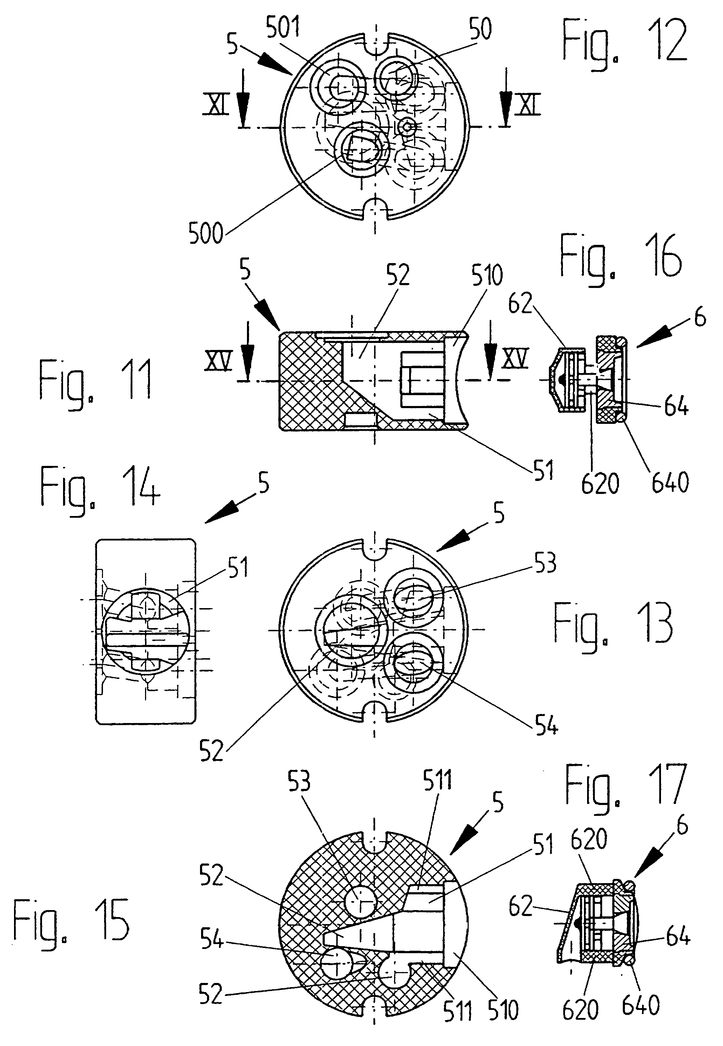

Ein weiteres Ausführungsbeispiel eines Paßstücks 5 ist in den Fig. 11 bis 17 dargestellt. Bei diesem Paßstück 5 können die bei dem Paßstück nach Fig. 3 bis 10 erforderlichen Stopfen 63 entfallen. Darüber hinaus ist eine vereinfachte Herstellung des Paßstücks im Spritzgießverfahren ermöglicht. Das Ventilglied 6 ist hierbei in einem separaten Gehäuse 62 angeordnet, wie es insbesondere aus Fig. 16 und 17 zu entnehmen ist. Der Mischwasserkanal 52 ist im wesentlichen zentral im Mittelbereich ausgebildet, wobei die Radialöffnung 51 derart profiliert ist, daß das Gehäuse 62 nur in der erforderlichen Drehstellung in die Radialöffnung 51 einbringbar ist. Das Paßstück 5 ist somit besonders geeignet für eine Herstellung im Spritzgießverfahren. Weiterhin bietet diese Ausführung die Sicherheit, daß bei einer etwaigen Verformung des Paßstücks 5 infolge der Kraft einer oder mehrerer Spannschrauben, mit der die Mischventilkartusche 2 zusammen mit dem Paßstück 5 gegen den Boden 12 gedrückt wird, die notwendige Leichtgängigkeit des auf den Fließdruck ansprechenden Ventilglieds 6 erhalten bleibt. Die Mischwasserführung erfolgt hierbei konzentrisch um das Gehäuse 62 in einem oberen und unteren Kreissegment, welche durch den Außendurchmesser des Gehäuses 62 und dem größeren Innendurchmesser der Radialöffnung 51 im Paßstück 5 gebildet werden. Die Segmente entstehen durch zwei seitliche Rippen 620 am Gehäuse 62, die in zwei entsprechende Aussparungen 511 des Paßstücks 5 in der Stecklage greifen. Dabei schneidet die eine Aussparung 511 den zur Anschlußöffnung 50 führenden Mischwasserkanal 52, so daß die bei dem Ausführungsbeispiel gemäß Fig. 1 bis 10 erforderlichen Stopfen 63 nicht benötigt werden. Das Einbauen dieses Paßstücks in das in Fig. 1 gezeigte Gehäuse einer Einlochwaschtischbatterie und die Funktionsweise des Umschaltventils erfolgt in der gleichen Weise, wie es zu dem Ausführungsbeispiel unter Fig. 1 bis 10 dargestellt ist.

Anstatt eines besonderen Ventilglieds 6 zur Umstellung des Mischwasserausflusses auf eine Leitung für das Mischwasser oder einen an dem Gehäuse angeordneten Auslauf kann auch in dem Paßstück 5 der Mischwasserkanal so ausgebildet sein, daß er sich in einem stromaufwärts gelegenen Teilbereich in Strömungsrichtung zu einer Strahldüse verengt, wobei mit Abstand zu der Strahldüse und koaxial zur Strahldüse ein Auslaufkanal für die Leitung zur Schlauchbrause angeordnet ist. In dem Raum zwischen der Strahldüse und dem Auslaufkanal ist hierbei ein senkrecht zu der Strahlrichtung angeordneter weiterer Auslaufkanal in den Auslauf an dem Gehäuse der Einlochwaschtischbatterie ausgebildet. Wird nun in der Mischventilkartusche Mischwasser erzeugt, so strömt es über die Strahldüse. Ist hierbei das in der Handbrause angeordnete Absperrventil geöffnet, d. h., der koaxial zur Strahldüse liegende Auslaufkanal ist freigegeben, so wird das Wasser durch die Strahldüse so stark beschleunigt und mit hoher Geschwindigkeit in den koaxialen Auslaufkanal gestrahlt, so daß in dem quer zur Strahlrichtung ausgebildeten zweiten Kanal für den Auslauf am Gehäuse kein Wasser gelangt. Wird dagegen das Absperrventil an der Handbrause geschlossen, so wird auch der koaxial zur Strahldüse angeordnete Auslaufkanal abgesperrt und das aus der Strahldüse austretende Wasser gezwungen, über den zweiten Kanal senkrecht zur Strahlrichtung über den Auslauf an dem Gehäuse abzufließen.

## Patentansprüche

1. Einlochbatterie zum Mischen und/oder Zapfen von Kalt-, Warm- oder Mischwasser mit einem Gehäuse (1), in dem wenigstens ein Aufnahmeraum (10) für ein Paßstück (5) mit Durchlaßöffnungen für eine Mischventilkartusche (2) vorgesehen ist und in dessen Boden (12) drei Öffnungen (120) angeordnet sind, in welche jeweils eine Leitung (40, 41, 42) für den Wasserab- und/oder Wasserzufluß einsteckbar ist, wobei das Paßstück (5) zusammen mit der Mischventilkartusche (2) gegen den Boden (12) des Gehäuses (1) verspannt ist, **dadurch gekennzeichnet, daß** in die dritte Öffnung (120) in dem Boden (12) eine Leitung (42) für den Mischwasserzufluß zu einer Schlauchbrause eingesetzt ist und das Paßstück (5) eine Anschlußöffnung(50) für diese Leitung (42) aufweist, wobei diese Anschlußöffnung (50) mit einer in dem Paßstück (5) angeordneten Umstellvorrichtung verbunden ist, so daß ein Umschalten des Mischwasserausflusses auf einen am Gehäuse (1) ausgebildeten Auslauf (11) oder die Leitung (42) für die Schlauchbrause vornehmbar ist.

2. Einlochbatterie nach Anspruch 1, **dadurch gekennzeichnet, daß** als Umstellvorrichtung eine in Strömungsrichtung sich verengende Strahldüse vorgesehen ist, wobei mit Abstand und koaxial zur Strahldüse ein Auslaufkanal für die Leitung zur Schlauchbrause angeordnet und im Raum zwischen der Strahldüse und dem koaxialen Auslaufkanal ein senkrecht zur Strahlrichtung verlaufender Kanal vorgesehen ist, der in den Auslauf des Gehäuses mündet.

3. Einlochbatterie nach Anspruch 1, **dadurch gekennzeichnet, daß** als Umstellvorrichtung ein auf den Fließdruck des Mischwassers ansprechendes Ventilglied (6) mit einem Verschlußkörper (60) für den Auslauf (11) vorgesehen ist, welches in einer Radialöffnung (51) des Paßstücks (5) angeordnet ist.

4. Einlochbatterie nach Anspruch 3, **dadurch gekennzeichnet, daß** das Ventilglied (6) in einem separaten Gehäuse (62) angeordnet ist, welches mit dem Ventilglied (6) als Baueinheit in einer Radialöffnung (51) des Paßstücks (5) angeordnet ist, die in der Stecklage von der zylindrischen Wandung des Aufnahmeraums (10) radial gestützt ist.

5. Einlochbatterie nach Anspruch 3 oder 4, **dadurch gekennzeichnet, daß** in dem Paßstück (5) Kanäle (52) zur Zu- und Abführung des Mischwassers für das Ventilglied (6) ausgebildet sind, deren Austritt oder Austritte aus dem Mantel des Paßstücks (5) mit mit einem Dichtring (630) versehene jeweilige Stopfen (63) verschlossen sind, wobei die Stopfen (63) in der Stecklage von der zylindrischen Wandung des Aufnahmeraums (10) gehalten sind.

6. Einlochbatterie nach wenigstens einem der Ansprüche 3 bis 5, **dadurch gekennzeichnet, daß** der Verschlußkörper (60) von einem in die Radialöffnung (51) einsetzbaren Ventilsitzring (64) aufgenommen ist, wobei der Ventilsitzring (64) in einer Einsenkung (510) angeordnet ist und an der Außenstirnseite einen Dichtring (640) trägt, mit dem der Ventilsitzring (64) in der Stecklage dichtend an der zylindrischen Wandung des Aufnahmeraums (10) anliegt und einen Kanal für den Auslauf (11) umgibt.

## Claims

1. Pillar mixer tap for mixing and/or dispensing cold, hot or mixed water, having a housing (1), in which at least one receiving space (10) for an adapter (5) with through-openings for a mixing valve cartridge (2) is provided and in the base (12) of which there are arranged three openings (120), into each of which a respective pipe (40, 41, 42) is insertable for water discharge and/or water admission, wherein the adapter (5), together with the mixing valve cartridge (2), is clamped against the base (12) of the housing (1), **characterised in that** a pipe (42) for the flow of mixed water to a hose-type shower is inserted into the third opening (120) in the base (12) and the adapter (5) has a connection opening (50) for this pipe (42), wherein this connection opening (50) is connected with a change-over device arranged in the adapter (5) so that the outgoing mixed water can be switched to an outlet (11) formed on the housing (1) or to the pipe (42) for the hose-type shower.

2. Pillar mixer tap according to claim 1, **characterised in that** a jet nozzle tapering in the direction of flow is provided as change-over device, wherein a discharge channel for the pipe to the hose-type shower is arranged spaced from and coaxial with the jet nozzle and a channel running perpendicularly to the jet direction is provided in the space between the jet nozzle and the coaxial discharge channel and opens out into the outlet of the housing.

3. Pillar mixer tap according to claim 1, **characterised in that** a valve member (6) responsive to the flow pressure of the mixed water and having a closure member (60) for the outlet (11) is provided as change-over device, and is arranged in a radial opening (51) of the adapter (5).

4. Pillar mixer tap according to claim 3, **characterised in that** the valve member (6) is arranged in a separate housing (62), which is arranged with the valve member (6) as a modular unit in a radial opening (51) of the adapter (5), and in the inserted position is supported radially by the cylindrical wall of the receiving space (10).

5. Pillar mixer tap according to claim 3 or 4, **characterised in that** channels (52) for admission and discharge of the mixed water for the valve member (6) are formed in the adapter (5), the exit or exits of the channels from the jacket of the adapter (5) being closed by a respective stopper (63) provided with a sealing ring (630), wherein the stoppers (63) are held in the inserted position by the cylindrical wall of the receiving space (10).

6. Pillar mixer tap according to at least one of claims 3 to 5, **characterised in that** the closure member (60) is received by a valve seat ring (64) insertable in the radial opening (51), the valve seat ring (64) being arranged in a recess (510) and carrying on the outer end face a sealing ring (640), with which the valve seat ring (64) in the inserted position abuts, forming a seal, the cylindrical wall of the receiving space (10) and surrounds a channel for the outlet (11).

## Revendications

1. Batterie monotrou pour mélanger et/ou distribuer de l'eau chaude, de l'eau froide ou de l'eau mitigée, comprenant un boîtier (1) dans lequel est prévu un volume de réception (10) pour une pièce d'ajustage (5) percée d'ouvertures de passage pour une cartouche à soupapes de mélange (2) et, dans le fond (12) du boîtier, trois ouvertures (120) dans lesquelles peuvent être emmanchées des conduites (40, 41, 42) d'amenée et/ou de sortie d'eau, la pièce d'ajustage (5) étant serrée avec la cartouche (2) contre le fond (12) du boîtier (1),
**caractérisée en ce que**
dans la troisième ouverture (120) du fond (12) est insérée une conduite (42) amenant de l'eau mitigée à un tuyau de douche et la pièce d'ajustage (5) présente, pour cette conduite (42) une ouverture de raccordement (50) reliée à un dispositif de commutation permettant d'orienter le flux d'eau mitigée vers une sortie (11) prévue dans le boîtier (1) ou vers la conduite (42) reliée au tuyau de douche.

2. Batterie monotrou selon la revendication 1,
**caractérisée en ce que**
comme dispositif de commutation, il est prévu un éjecteur se rétrécissant dans le sens d'écoulement et, à une certaine distance de l'éjecteur et coaxialement à celui-ci se trouve un canal de sortie pour alimenter la conduite allant au tuyau de douche, tandis que dans l'espace compris entre l'éjecteur et le canal coaxial de sortie se trouve un canal perpendiculaire à la direction du jet et débouchant dans la sortie du boîtier.

3. Batterie monotrou selon la revendication 1,
**caractérisée en ce que**
comme dispositif de commutation, il est prévu un organe de soupape (6) réagissant à la pression d'écoulement de l'eau mitigée et comportant pour la sortie (11) un obturateur (60) monté dans une ouverture radiale (51) de la pièce d'ajustage (5).

4. Batterie monotrou selon la revendication 3,
**caractérisée en ce que**
l'organe de soupape (6) est monté dans un boîtier séparé (62) formant avec lui un ensemble qui est monté dans une ouverture radiale (51) de la pièce d'ajustage (5) en étant alors soutenu radialement par la paroi cylindrique du volume de réception (10) quand la pièce d'ajustage (5) est montée.

5. Batterie monotrou selon la revendication 3 ou 4,
**caractérisée en ce que**
dans la pièce d'ajustage (5), pour l'amenée et l'évacuation de l'eau mitigée destinée à l'organe de soupape (6), sont formés des canaux (52) dont la ou les sorties à la surface de la pièce d'ajustage (5) sont obturées chacune par un bouchon (63) qui est muni d'un joint d'étanchéité (630) et qui, en position engagée est maintenu par la paroi cylindrique du volume de réception (10) quand la pièce d'ajustage (5) est montée.

6. Batterie monotrou selon au moins une des revendications 3 à 5,
**caractérisée en ce que**
le corps de fermeture (60) est logé dans une bague de siège de soupape (64) qui peut être introduite dans l'ouverture radiale (51) en étant montée dans un décrochement (510) de celle-ci et qui porte une bague d'étanchéité (640) par laquelle, quand la pièce d'ajustage (5) est montée, la bague de siège (64) est appliquée avec étanchéité sur la paroi cylindrique du volume de réception (10) et entoure un canal relié à la sortie (11).
